# DEMANDE DE BREVET EUROPEEN

(11) **EP 1 164 557 A1**
(43) Date de publication de la demande: **19.12.2001**
(21) Numéro de dépôt: 01400658.9
(22) Date de dépôt: 13.03.2001
(51) Int. Cl.: G08G 1/005, G01C 21/34

(54) **Dispositif de guidage**

(30) Priorité: 17.03.2000 FR 0003587
(71) Demandeur: Olivier Thillaye Communication, 37540 Saint-Cyr sur Loire (FR)
(72) Inventeur: Thillaye, Olivier, 37540 Saint-Cyr sur Loire (FR)
(74) Mandataire: Debay, Yves

(57) **Abrégé**

L'invention porte sur un dispositif de guidage électromagnétique caractérisé en ce qu'il comprend un navigateur récepteur (30) comportant des moyens de réception (33), des moyens de décodage (34), et des moyens d'avertissement (40) d'au moins un type de signaux à ondes électromagnétiques ou électriques émis par une ou plusieurs séries de balises (10) disposées le long d'un chemin de guidage. Les moyens de décodage (34) du navigateur (30) sont accordés sur le type de signaux émis par la série de balises (10), et les moyens de réception (33) du navigateur (30) et les moyens d'émission des balises (10) sont réglés de façon à ce que la réception d'un signal émis par une balise (10) ne soit effectuée que si le navigateur (30) se trouve à une distance d'une balise (10) inférieure à un rayon d'action donné.

## Description

La présente invention concerne un dispositif de guidage électromagnétique notamment destiné au balisage de chemins de randonnées.

Il est connu différents systèmes de balisage de chemins de randonnées qui peuvent être des panneaux fixes qui supportent des indications écrites ou des symboles qui sont appliqués sur des pierres ou sur des arbres. Ces dispositifs présentent les inconvénients de pouvoir être masqués par la végétation ou de s'altérer avec le temps. Par ailleurs ces dispositifs sont parfois difficilement interprétables et notamment lorsque le chemin de randonnée présente un carrefour.

Il est par ailleurs connu des systèmes de positionnement du type GPS qui nécessitent un équipement coûteux. Avec une programmation spécifique, ces systèmes donnent une position et une direction à suivre mais n'indiquent pas, par des signaux d'alerte, si l'utilisateur choisit le mauvais chemin lorsqu'il quitte un carrefour. De plus ces systèmes peuvent avoir des zones d'ombres dues à des reliefs accidentés ou à des écrans ( nuages, végétation ).

La présente invention a pour but de remédier à ces inconvénients. Cet objectif est atteint par un procédé de balisage selon la revendication 15.

Ce procédé peut être mis en oeuvre à l'aide du dispositif de guidage électromagnétique selon la revendication 1, du navigateur selon la revendication 16 et de la balise selon la revendication 17.

Des développements supplémentaires de l'invention sont décrits dans les revendications 2 à 14.

Le dispositif de guidage électromagnétique selon l'invention présente l'avantage de ne pas subir le risque d'être masqué par la végétation et de ne pas être soumis à l'usure.

Le dispositif de guidage électromagnétique selon l'invention présente l'autre avantage de pouvoir guider infailliblement l'utilisateur sur un chemin de guidage et même si le chemin de guidage présente un carrefour.

Le dispositif de guidage électromagnétique selon l'invention présente l'autre avantage de pouvoir indiquer plusieurs chemins de guidage.

Le dispositif de guidage électromagnétique selon l'invention présente l'autre avantage d'être peu coûteux pour l'utilisateur et de ne pas nécessiter pour l'utilisateur d'effectuer une programmation spécifique.

Le dispositif de guidage électromagnétique selon l'invention présente l'autre avantage de ne pas présenter de zone d'ombre et de pouvoir s'adapter à tout type de topologie comme des reliefs accidentés ou des grottes.

L'invention, avec ses caractéristiques et avantages, ressortira plus clairement à la lecture de la description faite en référence aux dessins annexés dans lesquels:
- la figure 1 représente une coupe schématique d'une balise ;
- la figure 2 représente une coupe d'une balise disposée dans un poteau ancré dans le sol ;
- la figure 3 représente une vue schématique du navigateur récepteur ;
- la figure 4 représente une vue simplifiée d'un chemin de guidage avec le positionnement des balises et leur rayon d'action ;
- la figure 5 représente une vue simplifiée selon un premier cas de figure d'un carrefour avec le positionnement des balises et leur rayon d'action
- la figure 6 représente une vue simplifiée selon un second cas de figure d'un carrefour avec le positionnement des balises et leur rayon d'action avec le navigateur programmé selon un premier mode de réalisation et avec des balises n'émettant chacune qu'un seul type de signal ;
- la figure 7 représente une vue simplifiée selon un troisième cas de figure de plusieurs chemins de guidage selon un second mode de réalisation avec des balises communes à plusieurs chemin de guidage et pouvant émettre chacune plusieurs types de signaux et avec un navigateur programmé selon ce second mode de réalisation.

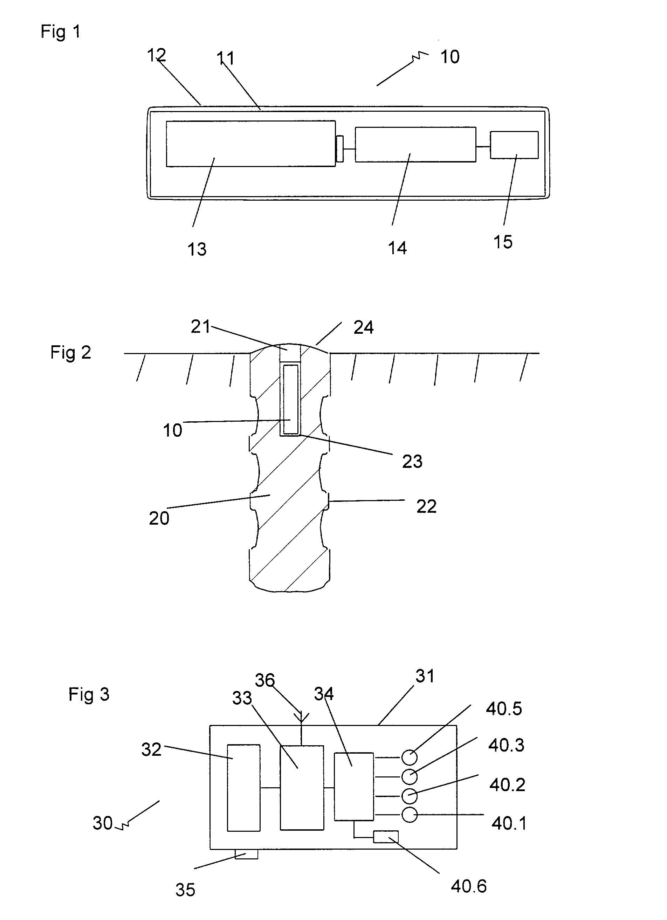

La figure 1 représente une coupe schématique d'une balise (10).

La balise (10) est constituée d'un boîtier (11) qui contient une pile (13), un circuit imprimé (14) et un émetteur (15). La pile (13) est, par exemple, une pile au lithium de 3,6 V dont la durée de stockage est supérieure à 10 ans. La pile (13) alimente un circuit imprimé (14) dont la fonction est de générer un signal spécifique qui sera émis par l'émetteur (15). L'émetteur (15) de la balise (10) est disposé à proximité d'une extrémité de la balise (10). Ce signal radio est émis sur une fréquence déterminée, variant selon les fréquences autorisées dans les différents pays, par exemple de l'ordre de 200 MHz à 500 MHz, pour la France les fréquences étant par exemple de 418 MHz ou 432 MHz. La balise (10) est par ailleurs entourée d'une enveloppe plastique étanche (12) ou sous vide afin de la préserver à l'abri de l'humidité. La balise (10) présente, par exemple, une forme générale cylindrique, dont le diamètre ne dépasse pas 10 cm. La puissance d'émission du signal émis par une balise est couramment réglée pour que le rayon d'action d'une balise, c'est-à-dire le rayon à l'intérieur duquel le signal émis par la balise sera reçu par le navigateur récepteur, soit supérieur à quatre mètres et inférieur à 20 mètres. Cette fonction est utile afin de baliser clairement un chemin de guidage et de pouvoir ainsi, notamment, distinguer le rayon d'action de balises différentes lorsque ces balises sont disposées sur des chemins de guidage différents, mais proches.

La figure 2 représente une coupe d'une balise (10) disposée dans un poteau (20) ancré dans le sol. Le poteau (20) est, par exemple, en ciment et de forme générale cylindrique. Le poteau (20) est ancré dans le sol et affleure à ras du sol. Sur sa face supérieure (24) qui est disposée à ras du sol, le poteau présente des moyens de fermeture sécurisés (21) qui sont, par exemple, un bouchon muni de moyens de verrouillage. L'ouverture de ces moyens de fermeture (21) donne accès à un logement creux (23) disposé à l'intérieur du poteau (20) et dont la taille est légèrement supérieure à la taille de la balise (10), de façon à pouvoir loger une ou plusieurs balises. Dans ce logement creux (23) est disposée la balise (10) avec son émetteur (15) positionné vers le haut. Les moyens de fermeture sécurisés (21) sont perméables à l'émission d'ondes électromagnétiques et n'interfèrent pas avec l'émission de ces ondes. La surface extérieure du poteau (20) qui est ancrée dans le sol présente par ailleurs un relief composé de nervures (22) qui constituent un moyen d'ancrage dans le sol. La fonction de ces nervures est notamment de prémunir contre le vol ou l'arrachement du poteau (20).

Selon une caractéristique de l'invention, la balise est munie d'un interrupteur marche/arrêt à bille pour le stockage des balises "tête en bas", de façon alors à garantir une consommation nulle lorsque la balise est tête en bas.

Selon une caractéristique de l'invention, la balise est munie d'un détecteur de pression qui signale un défaut de vide dans l'enveloppe étanche sous vide qui entoure la balise et qui modifie alors le codage du signal, de façon à signaler un défaut potentiel sur la balise.

La figure 3 représente une coupe schématique du navigateur récepteur (30). Le navigateur récepteur (30) est composé d'un boîtier (31). Ce boîtier (31) contient une pile (32) qui alimente le circuit électronique constitutif du navigateur récepteur (30) et notamment le circuit récepteur d'ondes électromagnétiques ou radioélectriques (33) relié à une antenne de réception (36) et le circuit décodeur-contrôleur (34). Lorsque le navigateur récepteur reçoit par son circuit récepteur (33) un signal émis par une balise (10), le circuit décodeur-contrôleur (34) décode le signal et alimente alors les moyens d'avertissement (40) du navigateur récepteur (30). Dans l'exemple représenté en figure 3, ces moyens d'avertissement (40) sont un haut-parleur (40.6), et quatre diodes électroluminescentes de couleurs différentes (40.1, 40.2, 40.3, 40.5). Bien évidemment, dans d'autres modes de réalisation, les moyens d'avertissement (40) du navigateur (30) pourront comporter un nombre différents de diodes électroluminescentes qui seront par exemple au nombre de deux. Chaque diode électroluminescente est dédiée à un type de balise spécifique qui émet un signal spécifique correspondant. Ainsi une diode électroluminescente dédiée à un type de balise s'allumera si le récepteur (33) reçoit un signal spécifique propre au type de balise correspondant. A la réception d'un signal provenant d'une balise d'un type spécifique, le haut-parleur (40.6) peut émettre un son ou un bip spécifique qui caractérise la réception d'un signal provenant d'une balise de ce type spécifique correspondant. Le navigateur récepteur (30) est par ailleurs muni d'un interrupteur (35) permettant de mettre le navigateur récepteur (30) en veille ou en marche.

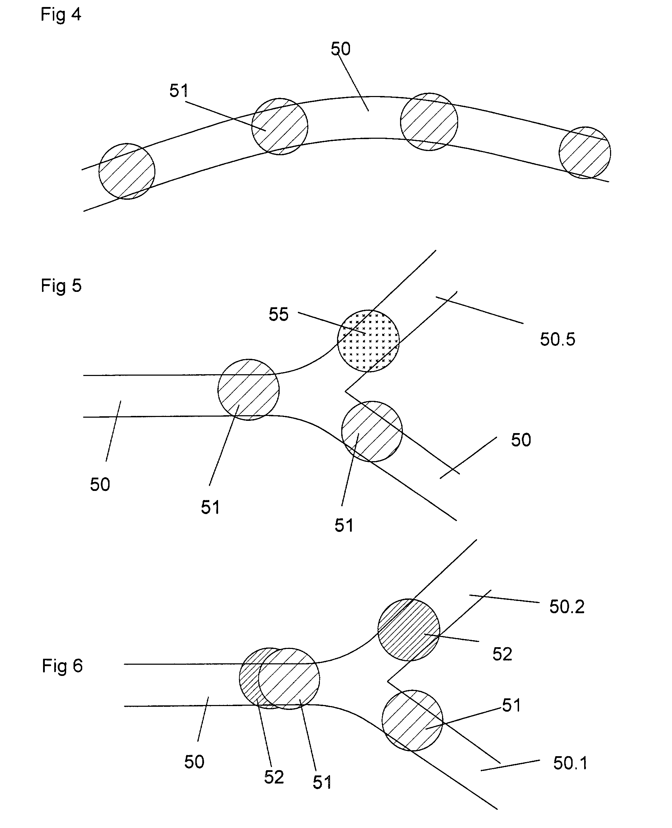

La figure 4 représente un chemin de guidage (50) muni de quatre balises disposées sur le chemin de guidage et leur rayon d'action (51). Ces quatre balises émettent un signal identique, par exemple une succession de bits ou une séquence de fréquences données. Elles sont disposées régulièrement le long du chemin de guidage (50) afin de guider l'utilisateur et de lui confirmer qu'il est toujours sur le bon chemin. Ces balises peuvent par exemple être disposées à plusieurs dizaines de mètres l'une de l'autre. Les poteaux (20) qui contiennent ces balises sont soit ancrés sur le chemin lui-même soit en bordure de chemin. Lorsque l'utilisateur rentre dans le rayon d'action de chacune de ces balises, il est averti par les moyens d'action (40) du navigateur récepteur (30). Ces moyens d'action (40) lui signalent par un avertissement spécifique qui peut être l'éclairage d'une diode électroluminescente de couleur spécifique (40.1, 40.2, 40.3, 40.5) ou l'émission par le haut parleur (40.6) d'un son spécifique, qu'il se trouve dans le rayon d'action d'une balise d'un type spécifique correspondant à la randonnée choisie.

La figure 5 représente un chemin de guidage (50) qui présente un carrefour avec une bifurcation (50.5). Dans cette configuration, l'utilisateur ne doit pas emprunter la bifurcation (50.5). Sur la bifurcation (50.5) et à proximité du carrefour, est disposée une balise dont le rayon d'action (55) n'atteint pas le carrefour. Cette balise émet un signal qui sera traduit par le navigateur récepteur en un avertissement spécifique signifiant que le chemin choisi est mauvais si l'utilisateur est rentré dans le rayon d'action de cette balise. Dans ce cas de figure, le code couleur employé pour les diodes électroluminescentes est couramment le rouge et le son un bip interrompu long.

La figure 6 représente un chemin de guidage (50) qui présente un carrefour avec une bifurcation menant à deux chemins de guidage (50.1, 50.2). Selon cette figure, le navigateur est programmé selon un premier mode de réalisation. Dans ce mode de réalisation, lorsque l'utilisateur est engagé sur le chemin de guidage (50), et à proximité du carrefour, le navigateur récepteur de l'utilisateur rentre à la fois dans le rayon d'action (51) d'une balise d'un premier type qui émet un signal d'un premier type et dans le rayon d'action d'une balise d'un second type (52) qui émet un signal d'un second type. Le navigateur lui indique alors qu'il emprunte à la fois un chemin du premier type en allumant une diode électroluminescente d'un premier type et un chemin du second type en allumant une diode électroluminescente d'un second type.. Si l'utilisateur emprunte le chemin de guidage (50.1), et à proximité du carrefour, il rentre dans le rayon d'action (51) d'une balise d'un premier type qui émet un signal d'un premier type. Le navigateur récepteur lui indique donc qu'il emprunte alors le chemin de guidage d'un premier type en allumant une diode électroluminescente d'un premier type. Si l'utilisateur emprunte le chemin de guidage (50.2), et à proximité du carrefour, il rentre dans le rayon d'action (52) d'une balise d'un second type qui émet un signal d'un second type. Le navigateur récepteur lui indique donc qu'il emprunte alors le chemin de guidage d'un second type en allumant une diode électroluminescente d'un second type. L'utilisateur peut donc déterminer par lui-même, en observant les différents signaux, le cheminement qu'il souhaite et dans ce cas le navigateur n'a pas besoin de programmation.

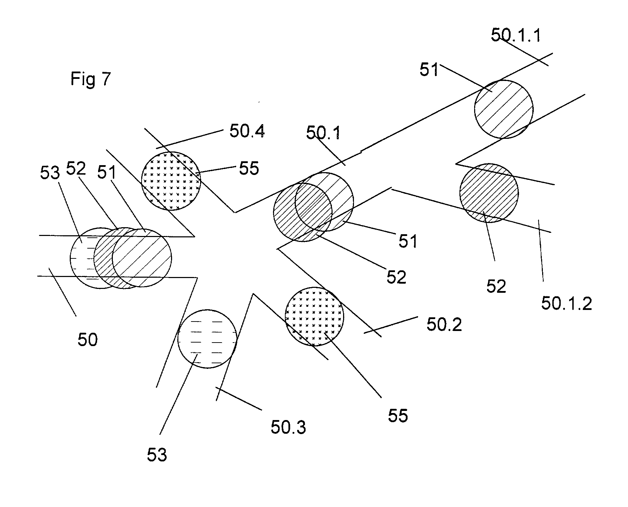

La figure 7 représente un chemin présentant deux carrefours. L'explication de cette figure est faite selon un second mode de programmation du navigateur et selon un second mode de type d'émission de signal par les balises. Selon ce second mode de réalisation, lorsque deux ou plusieurs chemins de guidage se confondent, une seule balise est implantée au lieu de deux. Cette balise est programmée pour émettre un signal formé d'une succession de bits et comprenant plusieurs signaux propres à chacun des types de chemin. Par exemple, sur le chemin (50), une seule balise est implantée qui émet un signal comprenant un signal d'un premier type (51) d'un rayon d'action, un signal d'un second type (52) d'un même rayon d'action et un signal d'un troisième type (53) d'un même rayon d'action. Sur le chemin (50.1) est implantée une balise qui émet un signal comprenant un signal du premier type (51) et un signal du second type (52). Sur les autres chemins (50.1.1, 50.1.2, 50.3, 50.4 ) sont implantées des balises qui émettent un seul signal propre au chemin qu'elles indiquent. Les balises (55) indiquent que le chemin employé est mauvais.

L'utilisateur sélectionne d'abord, par un bouton poussoir, le programme correspondant au chemin qu'il a choisi de suivre. Lors d'une détection, les balises en présence sont comparées avec le parcours sélectionné par l'utilisateur.

La programmation du navigateur suit une logique d'entrée/sortie qui est la suivante :

| | | |
|---|---|---|
| Sorties | L1 | LED 1 - (40.1, fig3) |
| | L2 | LED 2 - (40.2,fig3) |
| | L3 | LED 3 - ( 40.3,fig3) |
| | L5 | LED 5 - (40.5,fig3) |
| | Bip 1 | Bip sonnerie 1 |
| | Bip 2 | Bip sonnerie 2 |
| Entrées | B5 | Balise (55) - fig7 |
| | B1 | Balise (51) - fig7 |
| | B2 | Balise (52) - fig7 |
| | B3 | Balise (53) - fig7 |
| | B 1-2 | Balise (51+52) - fig7 |
| | B 1-3 | Balise (51+53) - fig7 |
| | B 2-3 | Balise (52+53) - fig7 |
| | B 1-2-3 | Balise (51+52+53) - fig7 |
| | P1 | Sélection du premier chemin (50, 50.1,50.1.1, fig7) |
| | P2 | Sélection du deuxième chemin (50, 50.1, 50.1.2, fig7) |
| | P3 | Sélection du troisième chemin (50, 50.3, fig7) |
| L1=B1 + B1-2 + B1-3 + B1-2-3 | | |
| L2= B2 + B1-2 + B2-3 + B 1-2-3 | | |
| L3= B3 + B1-3 + B2-3 + B 1-2-3 | | |
| Bip 1=B0 | | |
| Bip 2=P1.(B2 + B3 + B2-3) + P2.(B1 + B3 + B1-3) + P3.(B1+B2 + B 1-2) | | |
| L5= Bip 1 + Bip2 | | |

Le Bip 1 indique que le chemin est interdit et le Bip 2 indique que l'utilisateur s'engage sur un mauvais parcours.

Par exemple, si l'utilisateur sélectionne le premier chemin de guidage indiqué par les balises émettant un signal d'un premier type (51), les moyens d'avertissement correspondant au premier type seront actionnés s'il se trouve sur les chemins (50,50.1,50.1.1). Si l'utilisateur se trouve sur les chemins (50.1.2, 50.3), les moyens d'avertissement avertiront l'utilisateur qu'il se trouve sur un mauvais chemin ( allumage d'une diode électroluminescente de couleur rouge, bip 2). Par exemple, si l'utilisateur sélectionne le second chemin de guidage indiqué par les balises émettant un signal d'un second type (52), les moyens d'avertissement correspondant au second type seront actionnés s'il se trouve sur les chemins (50,50.1,50.1.2). Si l'utilisateur se trouve sur les chemins (50.1.1, 50.3,), les moyens d'avertissement avertiront l'utilisateur qu'il se trouve sur un mauvais chemin ( allumage d'une diode électroluminescente de couleur rouge, bip 2 ). Par exemple, si l'utilisateur sélectionne le troisième chemin de guidage indiqué par les balises émettant un signal d'un troisième type (53), les moyens d'avertissement correspondant au troisième type seront actionnés s'il se trouve sur les chemins (50,50.3). Si l'utilisateur se trouve sur les chemins (50.1.1, 50.1.2, 50.1,), les moyens d'avertissement avertiront l'utilisateur qu'il se trouve sur un mauvais chemin ( allumage d'une diode électroluminescente de couleur rouge, bip 2). Dans tous les cas de choix de sélection d'itinéraires, si l'utilisateur se trouve sur les chemins (50.2,50.4), les moyens d'avertissement du navigateur (30) avertiront l'utilisateur qu'il se trouve sur un chemin interdit (allumage d'une diode électroluminescente de couleur rouge, Bip1).

Dans un autre mode de réalisation, le navigateur (30) suit la même logique entrée/sortie que celle décrite précédemment pour la figure 7, mais dans ce mode de réalisation les moyens d'avertissements présentent une particularité. Les moyens d'avertissements ne comportent que deux diodes électroluminescentes de deux couleurs distinctes. Par exemple, une d'une couleur rouge indiquant que le chemin employé est mauvais et une d'une couleur verte indiquant que le chemin employé est le bon.. Si l'utilisateur sélectionne un parcours d'un type spécifique, au lieu de l'avertir par l'allumage d'une diode d'une couleur spécifique qu'il se trouve sur le bon chemin, les moyens d'avertissement avertiront l'utilisateur par l'allumage de la diode de couleur verte et par l'émission d'un bip court qu'il se trouve sur le bon chemin. Si l'utilisateur se trouve sur un mauvais chemin, les moyens d'avertissements (40) l'avertiront par l'allumage de la diode électroluminescente rouge et par l'émission d'un bip long qu'il se trouve sur un mauvais chemin. Dans ce mode de réalisation, les Bip 1 et les Bip 2 tels que décrits dans le tableau entrée/sortie pour la figure 7 sont identiques. Dans ce mode de réalisation, les moyens d'avertissements sont donc binaires ( diode verte et bip court pour le bon chemin, diode rouge et bip long pour le mauvais chemin). Avec ce mode d'avertissement, la logique des entrées sorties devient donc:

Dans ce mode on remplace dans le tableau précédent
LED 1=LED 2= LED3 = L marche = Led verte
LED 5 = L stop = LED rouge
Bip 1 = Bip 2
Bip stop=B0 + P1.(B2 + B3 + B2-3) + P2.(B1 + B3 + B1-3) + P3.(B1+B2 + B 1-2)
Lstop= B0 + P1.(B2 + B3 + B2-3) + P2.(B1 + B3 + B1-3) + P3.(B1+B2 + B 1-2)
Bip marche=P1(B1 + B1-2 + B1-3 + B1-2-3) + P2(B2 + B1-2 + B2-3 + B1-2-3 ) + P3( B3 + B2-3 + B1-3 + B1-2-3)
Lmarche = P1(B1 + B1-2 + B1-3 + B1-2-3) + P2( B2 + B1-2 + B2-3 + B1-2-3 ) + P3( B3 + B2-3 + B1-3 + B1-2-3)

L'invention porte donc sur un dispositif de guidage électromagnétique caractérisé en ce qu'il comprend un navigateur récepteur (30) comportant des moyens de réception (33) de signaux à ondes électromagnétiques ou électriques émis par des moyens d'émission de balises (10), les moyens de réception (33) et les moyens d'émission étant réglés de façon à ce que la réception d'un signal émis par une balise (10) ne soit effectuée que si le navigateur (30) se trouve à une distance d'une balise (10) inférieure à un rayon d'action donné, et comportant des moyens de décodage (34), caractérisé par le fait que les balises (10) sont prévues pour être disposées en une pluralité de séries le long d'une pluralité de chemins de guidage respectifs et pour émettre des signaux d'un type particulier à chaque série, les moyens de décodage (34) étant accordés sur les types de signaux pour commander, d'une façon spécifique à la réception d'un type de signal spécifique émis par une balise (10), des moyens d'avertissement (40).

Selon une autre caractéristique, le dispositif de guidage électromagnétique est caractérisé en ce que tout le long du chemin de guidage aucun rayon d'action ne soit supérieur à 20 mètres.

Selon une autre caractéristique, le navigateur récepteur (30) comporte des moyens de sélection du type de signal spécifique pour lequel il émet un signal d'avertissement.

Selon une autre caractéristique, le chemin de guidage est un chemin de randonnée.

Selon une autre caractéristique, les balises (10) sont ancrées dans le sol sur le chemin de randonnée ou à proximité immédiate du chemin de randonnée

Selon une autre caractéristique, lorsque le chemin de randonnée présente un carrefour des balises (10) sont disposées à proximité du carrefour et sur chaque chemin menant au carrefour et en ce que les rayons d'action de chacune de ces balises (10) disposées sur chacun de ces chemins n'interfèrent pas avec le rayon d'action d'une autre balise (10) disposée sur un autre chemin.

Selon une autre caractéristique, le navigateur est constitué d'un boîtier (31) comprenant une pile d'alimentation (32), un circuit récepteur (33), un circuit décodeur contrôleur (34) du type de signal et des moyens d'avertissement (40).

Selon une autre caractéristique les moyens d'avertissement (40) sont un haut parleur ou un vibreur.

Selon une autre caractéristique, les moyens d'avertissement (40) comprennent une pluralité de diodes électroluminescentes de couleurs différentes correspondant à chacun des avertissements spécifiques délivrés par les moyens d'avertissement (40).

Selon une autre caractéristique, la balise (10) est constituée d'un boîtier (11) comprenant une pile d'alimentation (12), un circuit imprimé (14) et un émetteur (15).

Selon une autre caractéristique, les balises émettent sur une longueur d'onde de 418 MHz ou de 433 MHz

Selon une autre caractéristique, une même balise (10) émet plusieurs signaux de types différents.

Selon une autre caractéristique, le navigateur est programmable de façon à avertir d'une façon sélective à la réception d'un signal correspondant à la sélection d'itinéraire.

Selon une autre caractéristique, le navigateur est programmé de façon à avertir d'une première façon qui indique que le chemin est bon s'il reçoit un signal d'un premier type provenant d'une balise et d'avertir d'une seconde façon qui indique que le chemin employé n'est pas le bon s'il reçoit un signal émis par une balise qui ne comprend pas de signal du premier type.

L'invention porte aussi sur un procédé de balisage de chemin de guidage caractérisé en ce qu'il comporte :
- une étape de poses de balises (10) le long du chemin de guidage
- une étape d'émission d'au moins un type de signaux électromagnétiques de ces balises (10)
- une étape de réception par un navigateur (30) du type de signaux émis par une balise (10)
- une étape de décodage par le navigateur (30) du type de signaux émis par la balise (10)
- une étape de génération d'avertissement par le navigateur (30) en fonction du programme sélectionné et dépendant du type de signaux reçus de la balise (10).

Selon une autre caractéristique, le navigateur utilisable dans le procédé comprend un boîtier (31) comprenant une pile d'alimentation (32), un circuit récepteur (33), un circuit décodeur contrôleur (34) du type de signal et des moyens d'avertissement (40).

Selon une autre caractéristique, la balise utilisable dans le procédé comprend un boîtier (11) comprenant une pile d'alimentation (12), un circuit imprimé (14) et un émetteur (15) d'un type de signal particulier.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de guidage électromagnétique comprenant un navigateur récepteur (30) comportant des moyens de réception (33) de signaux à ondes électromagnétiques ou électriques émis par des moyens d'émission de balises (10), les moyens de réception (33) et les moyens d'émission étant réglés de façon à ce que la réception d'un signal émis par une balise (10) ne soit effectuée que si le navigateur (30) se trouve à une distance d'une balise (10) inférieure à un rayon d'action donné, et comportant des moyens de décodage (34), **caractérisé par le fait que** les balises (10) sont prévues pour être disposées en une pluralité de séries le long d'une pluralité de chemins de guidage respectifs et pour émettre des signaux d'un type particulier à chaque série, les moyens de décodage (34) étant accordés sur les types de signaux pour commander, d'une façon spécifique à la réception d'un type de signal spécifique émis par une balise (10), des moyens d'avertissement (40).

2. Dispositif de guidage électromagnétique selon la revendication 1, **caractérisé en ce que** tout le long du chemin de guidage aucun rayon d'action ne soit supérieur à 20 mètres.

3. Dispositif de guidage selon la revendication 1, **caractérisé en ce que** le navigateur récepteur (30) comporte des moyens de sélection du type de signal spécifique pour lequel il émet un signal d'avertissement.

4. Dispositif de guidage électromagnétique selon la revendication 1, **caractérisé en ce que** le chemin de guidage est un chemin de randonnée.

5. Dispositif de guidage électromagnétique selon la revendication 4, **caractérisé en ce que** les balises (10) sont ancrées dans le sol sur le chemin de randonnée ou à proximité immédiate du chemin de randonnée.

6. Dispositif de guidage électromagnétique selon la revendication 4, **caractérisé en ce que** lorsque le chemin de randonnée présente un carrefour des balises (10) sont disposées à proximité du carrefour et sur chaque chemin menant au carrefour et **en ce que** les rayons d'action de chacune de ces balises (10) disposées sur chacun de ces chemins n'interfèrent pas avec le rayon d'action d'une autre balise (10) disposée sur un autre chemin.

7. Dispositif de guidage électromagnétique selon la revendication 1, **caractérisé en ce que** le navigateur est constitué d'un boîtier (31) comprenant une pile d'alimentation (32), un circuit récepteur (33), un circuit décodeur contrôleur (34) du type de signal et des moyens d'avertissement (40).

8. Dispositif de guidage électromagnétique selon la revendication 6, **caractérisé en ce que** les moyens d'avertissement (40) sont un haut parleur ou un vibreur.

9. Dispositif de guidage électromagnétique selon la revendication 1, **caractérisé en ce que** les moyens d'avertissement (40) comprennent une pluralité de diodes électroluminescentes de couleurs différentes correspondant à chacun des avertissements spécifiques délivrés par les moyens d'avertissement (40).

10. Dispositif de guidage électromagnétique selon la revendication 1, **caractérisé en ce que** la balise (10) est constituée d'un boîtier (11) comprenant une pile d'alimentation (12), un circuit imprimé (14) et un émetteur (15).

11. Dispositif de guidage électromagnétique selon la revendication 1, **caractérisé en ce que** les balises émettent sur une longueur d'onde de 418 MHz ou de 433 MHz.

12. Dispositif de guidage électromagnétique selon la revendication 1, **caractérisé en ce qu'**une même balise (10) émet plusieurs signaux de types différents.

13. Dispositif de guidage électromagnétique selon la revendication 1, **caractérisé en ce que** le navigateur est programmable de façon à avertir d'une façon sélective à la réception d'un signal correspondant à la sélection d'itinéraire.

14. Dispositif de guidage électromagnétique selon la revendication 13, **caractérisé en ce que** le navigateur est programmé de façon à avertir d'une première façon qui indique que le chemin est bon s'il reçoit un signal d'un premier type provenant d'une balise et d'avertir d'une seconde façon qui indique que le chemin employé n'est pas le bon s'il reçoit un signal émis par une balise qui ne comprend pas de signal du premier type.

15. Procédé de balisage de chemin de guidage **caractérisé en ce qu'**il comporte :
- une étape de poses de balises (10) le long du chemin de guidage
- une étape d'émission d'au moins un type de signaux électromagnétiques de ces balises (10)
- une étape de réception par un navigateur (30) du type de signaux émis par une balise (10)
- une étape de décodage par le navigateur (30) du type de signaux émis par la balise (10)
- une étape de génération d'avertissement par le navigateur (30) en fonction du programme sélectionné et dépendant du type de signaux reçus de la balise (10).

16. Navigateur utilisable dans le procédé selon la revendication 15, **caractérisé en ce qu'**il comprend un boîtier (31) comprenant une pile d'alimentation (32), un circuit récepteur (33), un circuit décodeur contrôleur (34) du type de signal et des moyens d'avertissement (40).

17. Balise utilisable dans le procédé selon la revendication 15, **caractérisée en ce qu'**elle comprend un boîtier (11) comprenant une pile d'alimentation (12), un circuit imprimé (14) et un émetteur (15) d'un type de signal particulier.
